# EUROPÄISCHE PATENTSCHRIFT

(11) **EP 4 211 499 B1**
(45) Veröffentlichungstag und Bekanntmachung des Hinweises auf die Patenterteilung: **21.08.2024**
(21) Anmeldenummer: 21787448.6
(22) Anmeldetag: 06.10.2021
(51) Int. Cl.: G01S 17/42, G01S 17/89, G01S 17/86, G01S 7/481, G01C 15/00

(54) **MOBILE SCANANORDNUNG UND VERFAHREN ZUR ANSTEUERUNG EINER MOBILEN SCANANORDNUNG**
MOBILE SCANNING ARRANGEMENT AND METHOD FOR CONTROLLING A MOBILE SCANNING ARRANGEMENT
DISPOSITIF DE BALAYAGE MOBILE ET PROCÉDÉ DE COMMANDE D'UN DISPOSITIF DE BALAYAGE MOBILE

(30) Priorität: 06.10.2020 DE 102020126106; 21.12.2020 DE 102020134414; 11.06.2021 DE 102021115186; 21.09.2021 DE 102021124440
(43) Veröffentlichungstag der Anmeldung: 19.07.2023
(73) Patentinhaber: Zoller & Fröhlich GmbH, 88239 Wangen im Allgäu (DE)
(72) Erfinder: FRÖHLICH, Christoph, Dr., 88239 Wangen (DE); HELD, Christoph, 88161 Lindenberg (DE); METTENLEITER, Markus, 88316 Isny (DE)
(74) Vertreter: Winter, Brandl - Partnerschaft mbB
(86) Internationale Anmeldenummer: PCT/EP2021/077624
(87) Internationale Veröffentlichungsnummer: WO 2022/074083

(56) Entgegenhaltungen:
- WO-A1-2019/193207
- DE-A1- 102014 110 995
- DE-U1- 202010 013 825
- PELKA MICHAL ET AL: "Testing the affordable system for digitizing USAR scenes", 2019 IEEE INTERNATIONAL SYMPOSIUM ON SAFETY, SECURITY, AND RESCUE ROBOTICS (SSRR), IEEE, 2 September 2019 (2019-09-02), pages 1 - 2, XP033620830, DOI: 10.1109/SSRR.2019.8848929
- VELAS MARTIN ET AL: "Indoor and Outdoor Backpack Mapping with Calibrated Pair of Velodyne LiDARs", SENSORS, vol. 19, no. 18, 12 September 2019 (2019-09-12), pages 3944, XP055872730, DOI: 10.3390/s19183944

## Beschreibung

Die Erfindung betrifft eine mobile Scananordnung gemäß dem Oberbegriff des Patentanspruchs 1 und ein Verfahren gemäß dem Oberbegriff des Patentanspruchs 10.

In der Druckschrift EP 3 056 923 A1 der Anmelderin ist eine Scananordnung mit zumindest einem Laserscanner offenbart, der im Feld befindliche Objekte scannen kann. Die Scananordnung ist mit einem Speicher zum Ablegen von projektbezogenen Daten und einem integrierten Rechner und mit einer Navigationseinheit zum Erfassen einer Scanner-Position und/oder einer Scanner-Relativposition zu einer Startposition ausgeführt. Ferner weist die Scananordnung einen Satellitenrechner, beispielsweise ein Tablet auf, das eine Registrierung des Scans im Feld in einem projektspezifischen Koordinatensystem parallel zu einem sich anschließenden Scanvorgangs mittels des Laserscanners durchführen kann.

Nachteilig an einer derartigen Scananordnung ist, dass diese nur eingeschränkt mobil ist. Genaugenommen ist die Scanvorrichtung von einem Standort zu einem weiteren Standort zu bewegen, wobei der Laserscanner in der Regel auf einem Stativ oder Ähnlichem montiert ist.

Aus dem Stand der Technik sind auch mobile Scananordnungen mit und ohne SLAM (Simultaneous Localization And Mapping) Technologie bekannt. Die SLAM-Technologie, bzw. ein SLAM-Modus hat oft den Nachteil einer relativ geringen Pixeldichte, inhomogener Abdeckung der Umgebung, sowie einer vergleichsweise reduzierten 3D-Genauigkeit.

Die Veröffentlichung "Testing the affordable system for digitizing USAR scenes", Pelka Michael et A (2019) zeigt eine an einem Rucksack montierbare, mobile Scaneinrichtung mit Lidar Sensoren für die Analyse der Umgebung bei Rettungseinsätzen mit Gebäudeschäden in städtischer Bauweise. Mittels einer Recheneinheit und der Lidar-Sensoren wird dabei das SLAM - Verfahren umgesetzt. Ein Bediener kann nachträglich Kanten in den generierten Bildern der Messdaten hinzufügen oder löschen, um schnell dreidimensionale Daten der zu analysierenden Umgebung zu erhalten.

Aus der Druckschrift DE 10 2014 110995 A1 ist ein Laserscanner zur Vermessung z.B. eines Gebäudes bekannt, die bewegbar ausgeführt und mit einer Recheneinheit datentechnisch verbunden ist. Zur Standorterfassung ist sie mit einer GPS-Einheit gekoppelt, wobei das Erfassen der Umgebung mittels einer schnellen Drehung eines Spiegels um eine horizontale Achse und einer langsamen Drehung einer gesamten übergeordneten Baugruppe um eine Hochachse durchgeführt wird. Durch Erzeugen mehrerer Scans an unterschiedlichen, statischen Positionen und dem Abgleich der generierten Daten in Clustern, ist eine Punktewolke des Gebäudes erzeugbar. Vom Benutzer kann zusätzlich wenigstens ein außerordentlicher Scan angefordert werden, wenn in zwei unterschiedlichen Clustern gespeicherte Punktewolken nicht miteinander korrelierbar sind. Die Scaneinrichtung ist während der jeweiligen Messung immobil, sodass der dabei erzeugte Scan als statisch anzusehen ist.

Die Druckschrift DE 20 2010 013825 U1 zeigt eine tragbare 3D-Laserscannereinrichtung, die in einem Raum zwischen diskreten Messpunkten zur Durchführung jeweils einer statischen Messung bewegbar ist. Dabei erfolgt eine Drehung eines Gehäuses der 3D-Laserscannereinrichtung um eine Hochachse. Es wird ein rotierender Laser genutzt, der im Gehäuse angeordnet ist. Die Messvorrichtung fusioniert Sensordaten mittels einer Recheneinheit, um die Eigenbewegung zwischen verschiedenen Messungen - beispielsweise per GPS-Daten - zu ermitteln. Bei ausreichend großer Überlappung der 3D-Punktewolken zweier Messungen ist die Eigenbewegung zwischen diesen beiden Messungen auch mittels der 3D-Punktewolken generierbar.

Die Druckschrift WO 2019 / 193207 A1 zeigt eine mobile Scananordnung mit mehreren Einzelscannern und mit einem Mehrfachscanner, die entlang einer vorbestimmten Bewegungsbahn oder eines Rucksack-Tragegestells verfahrbar oder versetzbar ist. Zur Auswertung der Messdaten dient eine Recheneinheit. Mittels der Scananordnung, insbesondere des Mehrfachscanners, und der Recheneinheit ist ein Echtzeit-3D-SLAM-Verfahren mit sechs Freiheitsgraden realisiert. Zur Berechnung der Punktewolke können die gleichzeitig aufgenommen Daten des Mehrfachscanners und der Einzelscanner genutzt werden. Die Auswertung der Daten erfolgt in Echtzeit oder die Punktewolke wird in einer Nachbearbeitung erstellt.

Die Veröffentlichung "Indoor and Outdoor Backpack Mapping with Calibrated Pair of Velodyne LiDARs", Velas Martin et Al., 2019 zeigt eine an einem Rucksack montierbare, mobile Scaneinrichtung mit zumindest zwei Lidar Sensoren für die Analyse der Umgebung. Mittels einer Recheneinheit und der Lidar-Sensoren ist ein SLAM Verfahren umsetzbar. Zur Standorterfassung ist die Verbindung der Recheneinheit mit einem weiteren Sensor, inbesondere einem GNNS, denkbar.

In der Druckschrift EP 3 280 977 B1 ist eine auch nach einem SLAM-Modus betreibbare mobile Scananordnung gezeigt, bei der in einem ersten Schritt eine 3D-Referenzkarte erstellt wird und dann in einem folgenden Schritt basierend auf der 3D-Referenzkarte in einem SLAM-Modus mittels eines 3D-Scanners die Umgebung gescannt und gleichzeitig eine Positionsbestimmung durchgeführt wird, so dass der aktuelle Standort des 3D-Scanners bekannt ist. Die aktuellen Scannerdaten werden dann innerhalb der bestehenden 3D-Referenzkarte aufgezeichnet und können auf einer Echtzeit-Benutzerschnittstelle (beispielsweise in einem Tablet) angezeigt werden.

Dabei ist gemäß einem Ausführungsbeispiel der 3D-Laserscanner auf einer Kraxe positioniert, die auch eine CPU zur Auswertung der vom Scanner erfassten Daten und der während des SLAM-Modus erfassten Standortdaten trägt. Dieser Scananordnung ist des Weiteren noch ein Tablet zugeordnet, über das mittels der CPU verarbeitete Informationen angezeigt werden.

Ferner sind sogenannte MMS-Systeme (Mobile Mapping System), die in einem MMS-Modus arbeiten, aus dem Stand der Technik bekannt. Der große Nachteil besteht darin, dass sich mit diesen Daten kein SLAM rechnen lässt, da die (im Wesentlichen parallelen) Profile keinen ausreichenden Überlapp aufweisen - es kommt also allein auf die INS (Inertial Measurement System) Genauigkeit des MMS-Systems an, welches deshalb sehr hochwertig und damit teuer ist.

Bekannt sind auch Scananordnungen, bei denen ein Laserscanner auf einem Trägerfahrzeug (SKID, FTS) montiert ist. Dieses Fahrzeug bewegt sich in der Umgebung, während der Laserscanner Scans der Umgebung aufnimmt.

Nachteilig an diesen bekannten mobilen Scananordnungen ist, dass der Laserscanner, als einer der Hauptbestandteile der Scananordnung, ausschließlich auf einen Anwendungsfall spezialisiert, einsetzbar ist. Außerdem sind 3D Genauigkeit und Auflösung solcher Systeme erheblich schlechter als bei festen Aufnahmestandpunkten.

Dem gegenüber liegt der Erfindung die Aufgabe zu Grunde, eine mobile Scananordnung zu schaffen, die flexibel auf den Anwendungsfall einsetzbar ist und dabei eine schnelle und exakte Erfassung großer Bereiche ermöglicht.

Der Erfindung liegt des Weiteren die Aufgabe zugrunde, ein Verfahren zur effektiven Ansteuerung einer derartigen Scananordnung zu schaffen.

Diese Aufgabe wird im Hinblick auf die mobile Scananordnung durch die Merkmale des Patentanspruchs 1 und im Hinblick auf das Verfahren durch die Merkmale des nebengeordneten Patentanspruchs 10 gelöst.

Weitere vorteilhafte Ausgestaltungen der Erfindung sind Gegenstand der Unteransprüche.

Die erfindungsgemäße mobile Scananordnung hat eine mobile Plattform, auf der zumindest eine Scaneinrichtung zur 2D- oder 3D-Vermessung von Objekten/Bereichen angeordnet ist. Die Plattform ist so gehalten, dass sie entlang einer vorbestimmten Bewegungsbahn entlang des zu vermessenden Bereiches verfahrbar ist und hat eine Recheneinheit (CPU), die in Datenverbindung mit der Scaneinrichtung steht. Die mobile Scananordnung hat des Weiteren eine Einrichtung zur Standorterfassung. Die Recheneinheit ermöglicht es, die mittels der in einem MMS-Rotationsmodus, insbesondere einem MMS-SLAM-Rotationsmodus betriebenen Scaneinrichtung und der Einrichtung zur Standorterfassung ermittelten Daten auszuwerten und eine Trajektorie (Bewegungsbahn) der Scaneinrichtung zu bestimmen, wobei die Recheneinheit ausgelegt ist, bei unzureichender Datenqualität der Trajektorie oder des resultierenden Scans zumindest eine Position zur zusätzlichen Durchführung eines statischen Scans zu bestimmen und eine entsprechende Information auszugeben.

Eine derartige mobile Scananordnung ist sehr flexibel einsetzbar, wobei gewährleistet ist, dass aufgrund der unterschiedlichen Messprinzipien (statischer Modus und MMS-Modus) eine hochpräzise Erfassung des Objektes bzw. des zu vermessenden Bereiches, beispielsweise einer Fertigungshalle, ermöglicht ist.

In einer möglichen Weiterbildung ist die Recheneinheit ausgelegt, bei unzureichender Datenqualität der Trajektorie oder des resultierenden Scans ein Signal zur Durchführung eines weiteren mobilen Scans in einem Profilmodus auszugeben.

Bei einem bevorzugten Ausführungsbeispiel ist die in die Plattform integrierte Recheneinheit mit zumindest einer der Scaneinrichtungen synchronisiert, so dass die im mobilen und/oder im statischen Modus erfassten Scans und Standortdaten mit den in der Scaneinrichtung gespeicherten Scandaten synchronisiert werden können. Dabei ist es besonders bevorzugt, wenn die Recheneinheit so ausgeführt ist, dass sie die im mobilen und/oder im statischen Modus erfassten Scans und Standortdaten mit dem Ziel einer Registrierung im Feld (vor Ort) verarbeiten kann. Diese Registrierung kann dann über die Recheneinheit oder über einen externen, der Scaneinrichtung zugeordneten Rechner erfolgen.

Dabei wird es besonders bevorzugt, wenn die Recheneinheit so ausgelegt ist, dass die verarbeiteten Datensätze/Scandaten zurück zur Auswerteeinheit der Scaneinrichtung übertragen werden können - mit anderen Worten gesagt, die Synchronisierung der Datensätze erfolgt zwischen der plattformseitigen Recheneinheit und der zumindest einen Scaneinrichtung in beiden Richtungen.

Die genannte Vorregistrierung im Feld erfolgt bei einer Variante der Erfindung über einen mit der Scaneinrichtung in Datenverbindung stehenden externen Rechner, beispielsweise ein Tablet (Handheld) oder über die Recheneinheit.

Die Weiterverarbeitung in einem Zentralrechner oder dergleichen ist erleichtert, wenn die Recheneinheit eine Schnittstelle für einen externen Speicher, beispielsweise eine SSD oder einen USB-Stick hat, auf dem die Projektdaten, d.h. die aus der Synchronisation der Recheneinheit und des internen Rechners der Scaneinrichtung entstandenen Daten, abspeicherbar sind.

Die Scananordnung ist besonders variabel einsetzbar, wenn die Plattform zumindest zwei Aufnahmen zur wahlweisen Positionierung einer Scaneinrichtung oder zur Positionierung von zumindest zwei Scaneinrichtungen hat. Eine derartige Ausführung ermöglicht es, die Scaneinrichtung in der jeweils optimalen Position auf der Plattform in Abhängigkeit vom zu vermessenden Objekt/Bereich zu positionieren. Prinzipiell können auch zwei Scaneinrichtungen montiert werden, so dass zwei Scans während einer Bewegung der Scananordnung erfasst werden können.

Dabei wird es besonders bevorzugt, wenn die Aufnahmen für die Scaneinrichtungen zueinander in einem vorbestimmten Winkel angestellt sind.

Die Qualität der Vermessung lässt sich mit vergleichsweise geringem vorrichtungstechnischem Aufwand verbessern, wenn die Scaneinrichtung ein 3D- oder ein 2D-Laserscanner und/oder eine Kamera ist.

Die Einrichtung zur Standorterfassung kann ein IMU-/INS- oder GNSS-basiertes System sein oder ein System, das Lokalisierungstechniken, wie Radar, Bluetooth, Ultraschall, RFID nutzt.

Das erfindungsgemäße Verfahren zur Ansteuerung einer mobilen Scananordnung, insbesondere einer mobilen Scananordnung mit den vorstehenden Merkmalen, setzt dementsprechend eine Scaneinrichtung voraus, die auf einer mobilen Plattform positioniert ist und die mit einer Recheneinheit ausgeführt ist, die mit der Scaneinrichtung synchronisiert ist. Die Ansteuerung einer derartigen mobilen Scananordnung erfolgt erfindungsgemäß derart, dass in einem ersten Schritt über die in einem MMS-Rotationsmodus, insbesondere einem MMS-SLAM-Rotationsmodus betriebenen Scaneinrichtung ein mobiler Datensatz erzeugt wird, der dem zu vermessenden Objekt/Bereich zugeordnet ist. Dieser mittels der Scaneinrichtung erfasste mobile Datensatz wird dann mittels der Recheneinheit ausgewertet und zudem wird eine Trajektorie berechnet.

In einem weiteren Schritt erfolgt eine Analyse der Trajektorie oder des mobilen Datensatzes (Scans) und ggf. eine Ausgabe eines Signals zur Durchführung eines statischen Scans von einem von der Recheneinheit bestimmten Standort.

Ergänzend kann ggf. eine Ausgabe eines Signals zur Durchführung eines weiteren mobilen Scans in einem Profilmodus der Scaneinrichtung.

Im Anschluss erfolgt dann eine Auswertung des statischen Scans bzw. des weiteren mobilen Scans und des mobilen Datensatzes aus der ersten Messung zur Bestimmung eines korrigierten mobilen Datensatzes und einer korrigierten Trajektorie, die ggf. mit der Scaneinrichtung synchronisiert werden.

Durch ein derartiges Verfahren ist eine hochpräzise Erfassung eines zu vermessenden Objektes/Bereiches mit minimalem vorrichtungs- und verfahrenstechnischen Aufwand möglich.

Das erfindungsgemäße Verfahren ist besonders effektiv, wenn auf der Basis des korrigierten Datensatzes im Feld eine Vorregistrierung oder eine Korrektur einer Registrierung mittels der Recheneinheit oder eines mit der Scaneinrichtung in Datenverbindung stehenden externen Rechners durchgeführt wird. Dieser externe Rechner kann, wie vorstehend erwähnt, beispielsweise ein der Scaneinrichtung zugeordnetes Tablet sein.

Die Weiterverarbeitung der Trajektorie und der mobilen Datensätze ist besonders einfach, wenn diese Daten auf einem externen Speicher abgelegt werden.

Das vorbeschriebene erfindungsgemäße Verfahren lässt sich besonders effektiv bei einer Scananordnung mit einem 3D-Laserscanner einsetzen, über den ein erster mobiler Datensatz in einem MMS-Rotationsmodus, vorzugsweise einem SLAM-Rotationsmodus, und ggf. der statische Scan erzeugt wird. Dabei ist es bevorzugt, wenn zumindest ein zweiter mobiler Datensatz über den in einem Profilmodus betriebenen 3D-Laserscanner entlang der gleichen Bewegungsbahn (ggf. in entgegengesetzter Richtung) oder über einen weiteren, auf der Plattform gehaltenen 2D-Laserscanner erzeugt wird. Durch diese zweimalige Erfassung von mobilen Datensätzen erfolgt eine Optimierung der Trajektorie und der resultierenden 3D-Punktwolke, wobei über die CPU alle verfügbaren Daten und Schleifenschlüsse aus anderen Durchgängen, Passpunkten und auch die genannten statischen Scans berücksichtigt werden können.

Die Erfassung des statischen Scans ist besonders exakt, wenn hierfür die Scaneinrichtung von der Plattform entfernt und in eine optimale Messposition verbracht wird. Dabei kann der 3D-Laserscanner oder die Scaneinrichtung dann auf ein Stativ oder dergleichen montiert werden.

Im Folgenden werden noch weitere innovative Aspekte der Erfindung angesprochen.

Die Plattform, auf der alle Komponenten präzise montierbar sind, kann, in Abhängigkeit des Anwendungsfalls, unterschiedlich ausgeführt sein. Die Plattform kann mehrere, bevorzugt justierbare, Vorrichtungen enthalten, um einen oder mehrere Scanner in verschiedenen Winkeln aufnehmen zu können.

Der Laserscanner, der in einer definierten Ausrichtung (vorzugsweise senkrecht oder nach hinten geneigt) an der Plattform lösbar befestigt werden kann, wodurch er jederzeit abgenommen und in traditioneller Weise auf einem Stativ aufgebaut werden kann, ist dazu ausgelegt, auch statische Scans aufzunehmen. Besonders vorteilhaft an einer derartigen Ausführung einer Scananordnung ist die mobile und flexible Anwendbarkeit. So kann der Scanner sowohl auf der Plattform betrieben werden, als auch davon unabhängig als sogenanntes Stand-alone Gerät an festen Standpunkten. Die Plattform ist zudem so ausgelegt, dass sie auf einem SKID/Schiebewagen oder einem Tragegestell montiert werden kann.

Vorzugsweise weist die Scananordnung eine integrierte oder separate Kamera-Einheit auf, bestehend aus mehreren Kameras, die im sichtbaren und/oder infraroten und/oder multispektralen Bereich Aufnahmen aufnehmen. Diese Kamera-Einheit ist vorzugsweise als 360°-Panorama Kamerasystem ausgeführt, wodurch vorteilhafterweise die gesamte Umgebung in einem auch als Panorama bezeichneten Datensatz erfasst werden kann.

In einem besonders bevorzugten Ausführungsbeispiel hat die Plattform der Scananordnung eine Elektronik-Einheit, die wesentliche zur Generierung von Versorgungs- und Steuersignalen erforderlichen Elektronik-Komponenten, sowie die Recheneinheit und ein Navigations-System (INS (Inertial Navigation System) & optional GNSS (Global Navigation Satellite System)) enthält. Es ist mit der Elektronikeinheit ferner eine vorzugsweise drahtlose Verbindung vom Rechner zu einem Handheld Gerät, z.B. Smartphone, Tablet o.Ä. herstellbar, über das der Bediener das Gesamtsystem steuern und/oder überwachen kann.

Die Transformationen relativ zum INS (Lever Arms) von Scanner und Kamera werden vorzugsweise durch Kalibrierung ermittelt, so dass die Daten aller Komponenten, synchronisiert über einen gemeinsamen "PPS"-Puls, in ein einheitliches Koordinatensystem transformierbar sind.

Vorzugsweise ist die Plattform und/oder die Elektronik-Einheit dazu ausgelegt, eine Basisplatine aufzunehmen. Diese Basisplatine dient u.A. dem Anschluss und der Verbindung unterschiedlicher Komponenten der Scananordnung.

Wie erläutert, ist eine Recheneinheit an oder in der Plattform montiert, und/oder Bestandteil der Elektronik-Einheit. Da diese direkt oder indirekt mit der Plattform verbunden ist, wird sie auch als Onboard-PC bezeichnet und ist im Feld direkt verwendbar. Dieser kann die Steuerung der einzelnen Komponenten vornehmen und/oder bereits live eine Vorabansicht generieren, die einem Nutzer auf einem Satellitenrechner, beispielsweise dem Handheld, Tablet, o.Ä. angezeigt wird.

Je nach Auslegung kann es vorteilhaft sein, dass Akkus zur Stromversorgung der elektrischen Komponenten vorgesehen sind. Besonders bevorzugt sind die Akkus derart an oder in der Plattform befestigt, dass sie leicht erreichbar und somit in kurzer Zeit austauschbar sind. Dieser Austausch kann während eines Scanvorgangs erfolgen, sodass dieser nicht unterbrochen werden muss. So kann bei einer Vermessung im Feld die Laufleistung der Scananordnung deutlich verlängert werden, indem die Akkus getauscht werden können. Ferner können die Akkus derart in oder an der Plattform integriert sein, dass sie auch den Laserscanner mit Energie versorgen, so dass die Akkus des Laserscanners nicht notwendigerweise an dem Laserscanner selbst gehalten sind. So lässt sich das Gewicht des Laserscanners und die rotierende Masse verringern, was vorteilhaft für die Qualität der Aufnahmen ist.

Bei einer vorteilhaften Ausführungsform ist ein DC/DC-Wandler für die Scananordnung vorgesehen, der ebenfalls an oder in der Plattform gehalten ist, insbesondere als Bestandteil der Elektronik-Einheit. Vorteilhafterweise sind so verschiedene Akkutypen verwendbar. Die Spannungen können zwischen 6V und 48V betragen und der DC/DC-Wandler passt diese an die Betriebsspannung der Scananordnung beziehungsweise der einzelnen Komponenten an.

In einer bevorzugten Weiterbildung ist der Laserscanner über einen Adapter mit einer an der Plattform befestigten Aufnahmevorrichtung mit der Plattform verbunden. Vorteilhafterweise ist eine exakte Ausrichtung so in einfacher Art und Weise gewährleistet.

Bei einem besonders bevorzugten Ausführungsbeispiel der erfindungsgemäßen mobilen Scananordnung ist ein Inertialsensor an der Plattform vorgesehen, der derart ausgerichtet ist, dass seine Orientierung zum Laserscanner fixiert und bekannt ist.

In einem alternativen Ausführungsbeispiel ist der Onboard PC, sowie ein Großteil der weiteren Komponenten der Elektronik-Einheit in einem Inneren der Plattform integriert, so dass über Schnittstellen externe Datenträger anschließbar sind. So kann vorteilhafter Weise die gesamte Plattform von einer portablen Vorrichtung auf eine andere umgebaut werden, ohne dass Einzelteile der Elektronik-Einheit abgebaut und wieder aufgebaut werden müssen.
Bevorzugt wird als portable Vorrichtung ein Lastenrucksack, wie beispielsweise eine sogenannte Kraxe verwendet. Die Plattform kann mit wenigen Handgriffen an der portablen Vorrichtung, beispielsweise der Kraxe montiert werden. Vorteilhafterweise sind derartige Kraxen ergonomisch optimiert, so dass ein Anwender die Belastung der Scananordnung auch über einen längeren Zeitraum ohne Probleme ertragen kann.

In einem weiteren bevorzugten Ausführungsbeispiel ist die portable Vorrichtung eine Produktionsplattform. Insbesondere kann es sich dabei um eine sogenannte SKID-Plattform oder ein FTS (fahrerloses Transportsystem) handeln, die beispielsweise in größeren Fertigungsstraßen, beispielsweise in der Automobilindustrie, verwendet werden. Die Plattform kann auf einem SKID-Förderer oder dem FTS schnell montiert werden, ohne den Produktionsprozess zu intervenieren und kann in einem Durchgang die gesamte Produktionshalle scannen und erfassen. Ein SKID dient dabei vorzugsweise dazu, den Innenraum der Produktionshalle zu erfassen, während mittels eines FTS vorzugsweise Geh-/Verfahrwege und Außenanlagen erfasst werden.

In einem alternativen bevorzugten Ausführungsbeispiel ist die portable Vorrichtung ein Gegenstand, der sich auf unterschiedliche Art und Weise fortbewegen kann. Dieser kann beispielsweise fahren, fliegen, oder schwimmen. Auch ein tauchender Gegenstand, oder ein krabbelnder Gegenstand sind denkbar, solange eine geeignete Aufnahme für die Plattform vorgesehen ist, so dass die mobile Scananordnung mit der Plattform an dem Gegenstand befestigt werden kann.

Ein erfindungsgemäßes Ausführungsbeispiel des Verfahrens weist folgende Schritte auf:
In einem ersten Schritt wird das Zielobjekt in einem Durchgang in einem SLAM-Rotationsmodus aufgenommen. Hierbei handelt es sich um einen typischen Betriebsmodus bereits am Markt erhältlicher SLAM Systeme. Vorteilhafterweise lassen sich sehr schnell große Bereiche aus einer kontinuierlichen Bewegung heraus erfassen.

In einem zweiten optionalen Schritt, wird die Szene in einem MMS-Profilmodus aufgenommen. Dieser Modus wird vorrangig in klassischen, meist Fahrzeug gestützten, MMS-Systemen verwendet. Der Vorteil besteht darin, große Bereiche schnell abscannen zu können, wobei die Genauigkeit und Datendichte jedoch wesentlich größer und auch homogener ist, als bei der Verwendung von einem SLAM-Rotationsmodus.

In einem dritten, optionalen Schritt, werden Einzelscans an stationären Punkten aufgenommen, bei denen eine sehr hohe Auflösung notwendig ist. Diese Einzelscans werden in einem klassischen Laserscanner Modus, bei dem viele Einzelstandpunkte aufgenommen werden, durchgeführt. Vorteilhafterweise sind die Auflösung und die 3D Genauigkeit in diesem Modus sehr gut.

Die einzelnen Schritte werden im Folgenden eingehender gezeigt.

Gemäß dem ersten Schritt wird nach Abschluss der Vermessung eine sehr genaue SLAM-basierte Trajektorie der Bewegung des Scans generiert, wobei bereits ein günstiges INS zu einer Positionsschätzung ausreichen kann. Wenn möglich wird mindestens ein Schleifenschluß (Rückkehr zum Anfangspunkt bzw. zu einzelnen Objekten während der Aufnahme) aufgenommen, um so langsame Driften der Trajektorie zu kompensieren.

Im zweiten Schritt wird beispielsweise die gleiche Route aus dem ersten Schritt noch einmal abgelaufen bzw. durchfahren, wobei allerdings im Profilmodus gescannt wird. Die (ungefähr parallelen) Profile werden mit Hilfe des SLAM Algorithmus anhand den bereits aus dem ersten Durchgang generierten Daten ausgerichtet, wodurch die Datendichte und Homogenität der 3D Daten stark vergrößert wird, bei ungefähr gleichbleibender Genauigkeit.

In einem optionalen dritten Schritt können an wenigen, besonders kritischen, Stellen Einzelscans im klassischen Laserscanner Modus, also einem sphärischen 3D-Scan an einem festen Standpunkt, aufgenommen werden, entweder um bestimmte Referenz-Objekte hochgenau zu bestimmen oder bestimmte Objekte mit besonders hoher Auflösung zu vermessen. Die einzelnen Standpunkte sind dem System zumindest ungefähr bekannt, entweder über den SLAM-Algorithmus oder die internen Sensoren der Scananordnung oder des Laserscanners, so dass diese Scans vorteilhafterweise nahtlos mit dem bestehenden Datensatz registriert werden können.

Vorteilhafterweise erhält man bei Anwendung des erfindungsgemäßen Verfahrens in kurzer Zeit eine hoch aufgelöste, hoch genaue 3D Punktwolke eines großen Bereiches, wobei Genauigkeit und Auflösung der des klassischen Laserscanner Modus entsprechen - und dies ohne den Einsatz teurer INS Systeme. Ebenso kann in vorteilhafter Art und Weise auf den Einsatz weiterer Laserscanner verzichtet werden.

Bei einem bevorzugten Ausführungsbeispiel werden die einzelnen Aufnahmen, auch 3D-Scans genannt, im Feld registriert. Sobald die Scans aus dem Laserscanner-Modus zum im SLAM-Modus erfassten Datensatz registriert wurden, können diese, aufgrund ihrer hohen Genauigkeit als Referenz dienen, um die Profile des SLAM-Datensatzes noch präziser auszurichten, was bevorzugt automatisch erfolgt. Auch könnten mehrere unabhängige, aber überlappende SLAM-Datensätze sich gegenseitig als Referenz dienen. Im Falle aufgenommener Referenz-Objekte kann die im SLAM berechnete Trajektorie an sogenannte "Tie-Points" gezogen und damit hochgenau verbessert werden. Natürlich können Tie-Points auch auf andere Weise generiert werden, etwa durch vom Kamera-System oder mit Hilfe von durch den Laserscanner im statischen Einsatz erfassten Zielmarken.

Ebenso lässt sich die Schätzung der Trajektorie für den SLAM-Datensatz verbessern, indem etwa differentielle GNSS Daten mit einbezogen werden.

In einem bevorzugten Ausführungsbeispiel des erfindungsgemäßen Verfahrens lässt sich die Kamera-Einheit vorteilhafterweise über entsprechende Videometrie-Auswertung, beispielsweise Schätzung der Bewegung durch Tracking von Merkmalen in aufeinander folgenden Bildern, oder Video-SLAM zu einer weiteren Verbesserung der Trajektorie nutzen.

Der zweite Schritt kann eingespart werden, wenn die verwendete Scananordnung mit einem weiteren Profilscanner ausgestattet wird, der zusätzliche ungefähr parallele Profile bereits während des ersten Durchgangs aufnimmt und dessen Daten mit Hilfe des SLAM Prozesses an den Daten des ersten Scanners ausgerichtet werden.

Die Anmelderin behält sich vor, auf die Plattform mit den Aufnahmen für die Scaneinrichtung und der integrierten Recheneinheit (Onboard-PC) einen eigenen unabhängigen Anspruch zu richten.

Ausführungsbeispiele der Erfindung werden anhand von Zeichnungen erläutert.
Figur 1 zeigt ein Ausführungsbeispiel einer erfindungsgemäßen mobilen Scananordnung in einer perspektivischen Darstellung,
Figuren 2a und b zeigen einen Laserscanner in zwei verschiedenen Betriebsmodi,
Figuren 3a bis 3e zeigen unterschiedliche Anordnungen einer mobilen Scananordnung im Hinblick auf die Positionierung der Komponenten an einer Plattform;
Figuren 4a bis d zeigen Anwendungsbeispiele einer erfindungsgemäßen mobilen Scananordnung;
Figuren 5a, 5b dreidimensionale Ansichten einer Plattform der erfindungsgemäßen Scananordnung;
Figur 6 eine prinzipielle Darstellung wesentlicher Komponenten einer erfindungsgemäßen Scananordnung;
Figur 7 ein allgemeines Ablaufschema eines erfindungsgemäßen Verfahrens zur Erzeugung eines mobilen Datensatzes und zur Ermittlung einer Trajektorie und
Figur 8 ein konkretes Ablaufschema, bei dem zur Erfassung einer 3D-Punktewolke eines zu vermessenden Bereiches ein 3D-Laserscanner verwendet wird.

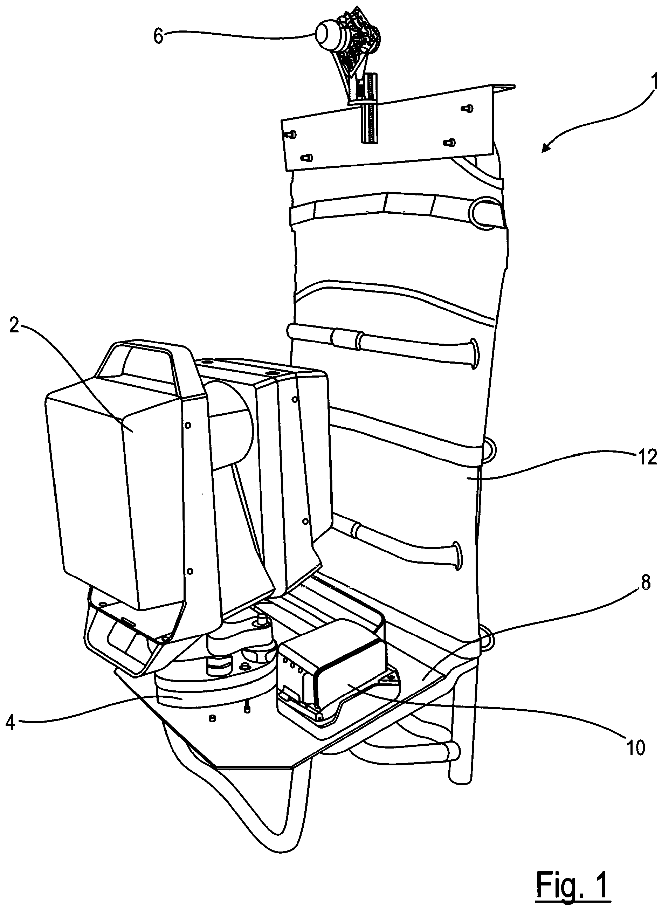

In der Figur 1 ist ein Ausführungsbeispiel einer erfindungsgemäßen mobilen Scananordnung 1 gezeigt. Diese weist einen 3D-Laserscanner 2 auf, der in diesem Ausführungsbeispiel auf einem Dreifuß 4 oder einer sonstigen Stützkonsole befestigt ist. Ferner weist die Scananordnung 1 eine Kamera-Einheit 6 auf, die beabstandet von dem Laserscanner 2 ausgebildet ist. Die Kamera-Einheit 6 ist dabei so angeordnet, dass sie eine weitestgehend freie Sicht auf die Szene hat. Die Kamera-Einheit 6 ist auch zu einer den Laserscanner 2 tragenden Plattform 8 beabstandet - denkbar ist auch, dass die Kamera in der Plattform oder im Scanner integriert ist, um im Profilmodus Bilder möglichst parallax-frei aufzunehmen. Der Laserscanner 2 ist über den Dreifuß 4 oder eine andere geeignete Vorrichtung und eine im Folgenden näher beschriebene Aufnahme mit der Plattform 8 verbunden, wobei eine geneigte (ca. 45° Neigung) bzw. senkrechte Haltung bevorzugt ist. Eine nicht exakte Ausrichtung des Laserscanners 2 auf der Plattform 8 kann ggfs. über einen elektronischen Kompensator des Laserscanners 2 kompensiert werden.

Ein in der Figur nicht gezeigter Inertialsensor sollte in einer vorbestimmten Relativposition etwa mittig unter dem Laserscanner 2 positioniert werden.

Die Plattform 8 ist mit einer Elektronik-Einheit ausgeführt, die mit einem Onboard-PC und einem DC/DC-Wandler ausgeführt ist. Der Onboard-PC verfügt auf seiner Rückseite beispielsweise über Gewinde, die beispielsweise in Art einer VESA-Aufnahme ausgebildet sind. So kann der Onboard-PC, der ggf. mit Gummifüßen ausgeführt ist, mit der Plattform verschraubt werden oder mit einer andersartigen Halterung innerhalb der Technik-Einheit gegen ein Verrutschen und Erschütterungen gesichert sein.

Auf einer Oberseite der Plattform 8 ist zumindest ein Akku 10 gehalten. Bevorzugt sind mehrere Akkus 10 an der Plattform 8 derart gehalten, dass diese einfach auswechselbar sind um im Feld eine längere Scanzeit zu ermöglichen. Die Verschaltung der Akkus erfolgt dabei vorzugsweise derart, dass zumindest ein Akku ohne Unterbrechung des Scans auswechselbar ist.

Die Kamera-Einheit 6 ist im vorliegenden Ausführungsbeispiel mit einem Winkel an einem Lastenrucksack 12 befestigt. Etwa in der Mitte des Winkels ist ein Profil befestigt, an das die Kamera-Einheit 6 montiert wird. Der Winkel ist beispielsweise beidseitig an einem Rahmen des Lastenrucksacks 12 geschraubt, oder auf andere Art lösbar befestigt. Es ist insbesondere von Vorteil, wenn die Befestigung der Kamera-Einheit 6 derart ausgeführt ist, dass diese starr gegenüber dem Rahmen des Lastenrucksacks 12 ausgeführt ist. Eine Kalibrierung der Scananordnung 1 wird so wesentlich erleichtert. Kabel der Kamera-Einheit 6 sind entlang einer von einem Anwender abgewandten Seite des Lastenrucksacks 12 entlang zum Onboard-PC verlegt.

Die mobile Scananordnung 1 verfügt insgesamt über drei Betriebsmodi, wobei der dritte Betriebsmodus erst in einer späteren Figur näher erläutert wird.

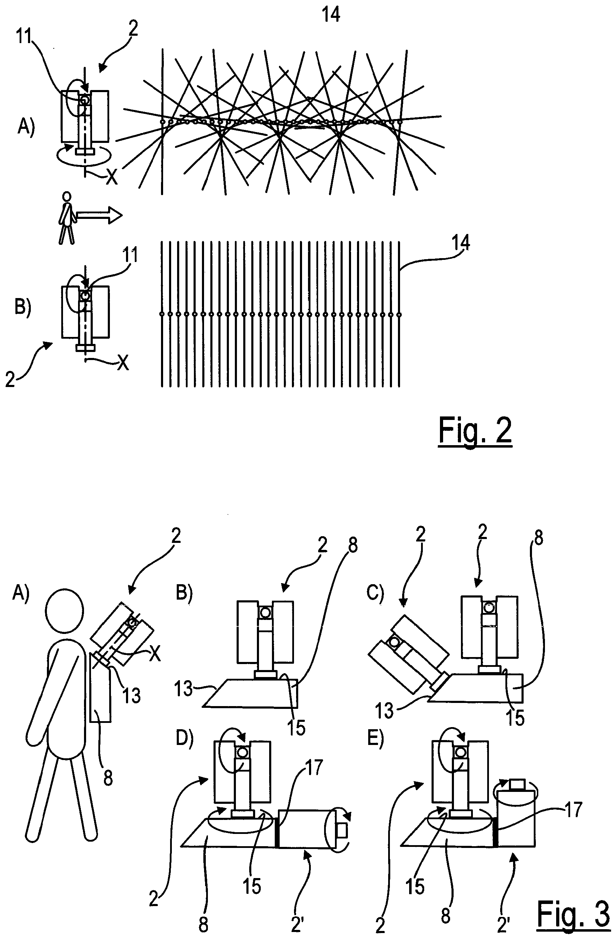

In der Figur 2 sind schematisiert zwei Betriebsmodi (MMS-Rotationsmodus, Profilmodus) des Laserscanners der mobilen Scananordnung 1 gezeigt.

Im MMS- oder SLAM-Rotationsmodus befindet sich der Laserscanner 2 auf der sich bewegenden Plattform 8 und dreht sich (wenige Male pro Sekunde) um seine Hochachse X, während ein Rotor 11 für eine schnelle vertikale Ablenkung des scannenden Laserstrahles 14 sorgt. Gemäß der Darstellung aus Figur 2a entsteht dabei (durch die horizontale Bewegung der Plattform) eine Helix aus in sich um die Hochachse verdrehten vertikalen Profilen, die dadurch einen großen Überlappungsbereich aufweisen. Diese Überlappung ist essentiell für den SLAM Algorithmus, der erst daraus (und der Bewegungs-Schätzung des INS) die exakte Trajektorie und damit die Transformation aller aufgenommenen Daten berechnen kann.

In Figur 2b ist der zweite Betriebsmodus (Profilmodus) gezeigt. Demnach dreht sich dabei nur der Rotor 11 zur vertikalen Strahlablenkung. Der Laserscanner 2 dreht sich nicht um seine Hochachse X, sondern hält diese in einem definierten Winkel, bevorzugt etwa senkrecht zur Bewegungsrichtung der Plattform. Die so aufgenommenen Profile der Laserstrahlen 14 sind also ungefähr parallel zueinander. Aufgrund der parallelen Anordnung der aufgenommenen Profile ist eine derartige Messung alleine für die Auswertung mittels eines SLAM-Algorithmus nicht nutzbar, da dieser sich überschneidende Profile voraussetzt.

Anhand der Abbildungen in Figur 3 sind unterschiedliche Möglichkeiten der Positionierung der erfindungsgemäßen Scananordnung dargestellt.

Gemäß Figur 3A ist die mobile Scananordnung beispielsweise auf einem Lastenrucksack oder einer Kraxe montiert, wobei die Plattform 8, wie im Folgenden näher erläutert, als Gehäuse ausgeführt ist, auf dem der jeweilige Laserscanner 2 in variabler Position montierbar ist. Beim dargestellten Ausführungsbeispiel hat die Plattform 8 eine Schrägfläche 13, die beim dargestellten Ausführungsbeispiel mit einem Winkel von etwa 45° zur Vertikalen angestellt ist (selbstverständlich sind auch andere Winkel möglich). Auf dieser Schrägfläche 13 ist dann über einen geeigneten Adapter der Laserscanner 2 montiert, so dass er beispielsweise in einem Betriebsmodus gemäß Figur 2A um seine Hochachse X drehbar ist. Durch die Schrägstellung ist gewährleistet, dass eine Kollision der die Scananordnung tragenden Person während des Abgehens des zu vermessenden Bereiches mit dem Laserscanner 2 nicht zu erwarten ist. Eine derartige Anordnung kann beispielsweise auch bei der Montage der Scananordnung auf einem Schiebewagen genutzt werden, wobei dann allerdings die Plattform 8 in Horizontalrichtung angeordnet ist, so dass die Hochachse X des Laserscanners 2 in Schieberichtung nach oben orientiert ist.

Wie in Figur 3B angedeutet, kann der Laserscanner 2 jedoch auch auf einer der Großflächen 15 montiert werden, die sich an die vorgenannte Schrägfläche 13 anschließt. Bei einem derartigen Konzept ist dementsprechend vorzugsweise die Plattform 8 liegend angeordnet. Eine derartige Plattformanordnung ist beispielsweise bei der Montage der Scananordnung auf einem Schiebewagen, einem SKID, einem FTS oder dergleichen vorteilhaft.

Da bei einem derartigen Konzept die doch recht schwere Scananordnung nicht von einer Person getragen wird, kann die Vermessungsgeschwindigkeit und die Flexibilität der Anordnung verbessert werden, indem sowohl die Großfläche 15 als auch die Schrägfläche 13 mit einem Laserscanner 2 belegt werden. Dementsprechend ist die Plattform 8 dann mit mehreren Aufnahmen für die Laserscanner 2 ausgeführt. Dabei kann beispielsweise einer der Laserscanner 2 im SLAM-Rotationsmodus betrieben werden, während der andere Laserscanner 2 im vorbeschriebenen Profilmodus arbeitet. Die Auswertung beider Scans zur Ermittlung des mobilen Datensatzes und der Trajektorie erfolgt dann wiederum über den im Folgenden näher beschriebenen Onboard-PC.

Auch bei diesem Ausführungsbeispiel ist die Plattform 8 in Horizontalrichtung angeordnet.

Beim Ausführungsbeispiel gemäß Figur 3D ist ein 3D-Laserscanner, beispielsweise der IMAGER^{®} der Anmelderin, auf der Großfläche 15 montiert, während ein 2D-Laserscanner, beispielsweise der Profiler^{®} 2' der Anmelderin, an einer in Vertikalrichtung verlaufenden Schmalseite 17 der Plattform 8 befestigt ist. Dementsprechend wird für den Rotationsmodus der IMAGER^{®} und für den Profilmodus der Profiler^{®} 2' genutzt. Beide Messungen können wiederum gleichzeitig durchgeführt werden.

Prinzipiell ist es auch möglich, beide Positionen mit einem IMAGER^{®} 2 oder einem Profiler^{®} 2' zu besetzen. Bei der Verwendung von zwei Profilern^{®} 2' ist der SLAM-Algorithmus verwendbar, da sich aufgrund der Schrägstellung die Profile überschneiden.

In Figur 3E ist schließlich eine Relativpositionierung gezeigt, bei der der Profiler^{®} 2' an der Schmalseite 17 in Vertikalrichtung angeordnet ist, so dass entsprechend das Profil in Horizontalrichtung erfasst wird.

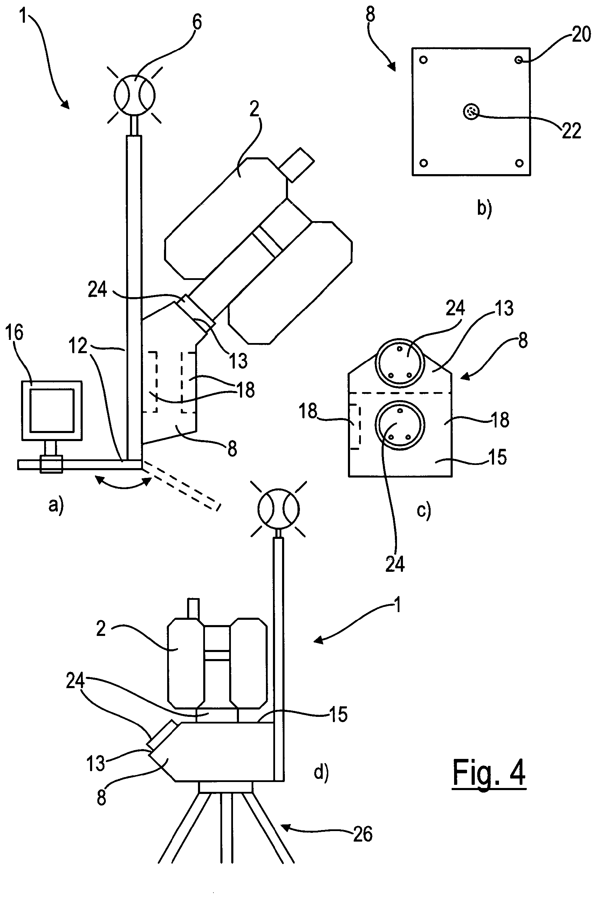

Figur 4a zeigt eine mobile Scananordnung 1 mit einem Laserscanner 2 der etwa in einem 45° Winkel an der Schrägfläche 13 der Plattform 8 gehalten ist. Diese ist an dem Gestell eines Lastenrucksacks 12 gehalten. Dieses Gestell weist in einem unteren, abgewinkelten Bereich einen abnehmbaren Handheld 16 (Tablet) auf. Ferner ist die Kamera-Einheit 6 gezeigt, die an einem oberen Ende des Lastenrucksacks 12 vorgesehen ist. Die Plattform 8 hat mit gestrichelten Linien angedeutete, seitliche Batteriefächer 18, in die Akkus eingesetzt werden können, die die mobile Scananordnung 1 mit Energie versorgen. Dies wird im Folgenden noch näher erläutert.

Figur 4b zeigt eine Unterseite der Plattform 8, mit der diese auf einer Transportvorrichtung montiert werden kann. Hierzu sind in Eckbereichen der Plattform Gewindebohrungen 20 eingebracht, über die verhältnismäßig kleinen Schrauben die Plattform an der vorgesehenen Transportvorrichtung halten können. Zentral oder im Schwerpunkt an der Unterseite der Plattform 8 ist eine etwas größere Gewindebohrung 22 vorgesehen, über die eine zentrale Verschraubung mit der Transportvorrichtung erreicht werden kann.

Figur 4c zeigt eine Oberseite der Plattform 8, wobei in einem hier oben gezeigten und durch eine gestrichelte Linie angedeuteten Bereich die Schrägfläche 13 angedeutet ist, die beispielsweise etwa im 45° Winkel zu der Großfläche 15 der Plattform 8 angestellt ist. Sowohl in der Schrägfläche 13, als auch auf der Großfläche 15 der Plattform 8 sind Aufnahmen 24 vorgesehen, die zur Aufnahme von Laserscannern 2 dienen. Die Aufnahmen 24 können beispielsweise als Bajonettverschluss ausgeführt sein oder ein Außengewinde aufweisen, oder aber Aufnahmebohrungen haben und/oder auch Gewindebolzen aufweisen, die zur festen Positionierung des Laserscanners 2 dienen.

Figur 4d zeigt eine mobile Scananordnung 1 mit dem Laserscanner 2, der Kamera-Einheit 6 und der Plattform 8, die zwei Aufnahmen 24 hat, auf einem Stativ 26. Diese Anordnung wird beispielsweise zur Anwendung des dritten Betriebsmodus verwendet, der im Folgenden beschrieben ist.

In dem dritten Betriebsmodus wird der Laserscanner 2 vorzugsweise abgebaut und nimmt von einem festen Standpunkt, typischer Weise einem Stativ 26, einen herkömmlichen Panorama-Scan auf. Sofern die Plattform 8 still steht, kann der Scanner auch auf der Plattform 8 montiert bleiben um einen herkömmlichen 360° Scan aufzunehmen.

Bei dem in Figur 4d dargestellten Ausführungsbeispiel ist der Scanner 2 mit der Plattform 8 auf dem Stativ 26 montiert. Prinzipiell kann der Scanner 2 auch von der Plattform 8 gelöst und dann auf einem Stativ 26 oder dergleichen positioniert werden. In diesem Fall ist jedoch dafür zu sorgen, dass die statischen Scans mit dem Onboard-PC der Plattform 8 synchronisiert werden.

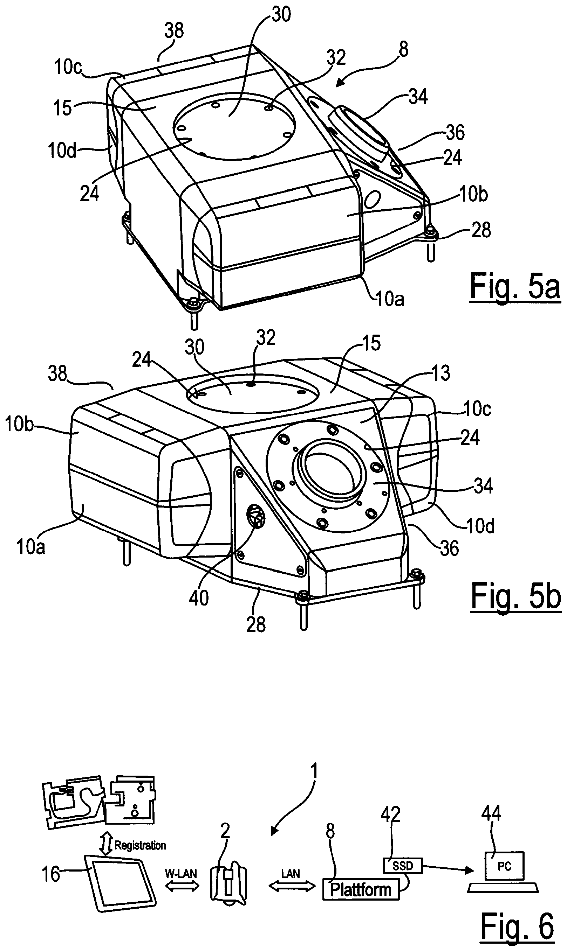

Die Figuren 5a, 5b zeigen konkrete Ausführungen der Plattform 8. Wie bereits vorstehend erläutert, ist diese auf einer Grundplatte 28 montiert, die ihrerseits über Schrauben oder dergleichen auf der jeweiligen mobilen Tragstruktur, beispielsweise dem Lastenrucksack 12, dem SKID, einem FTS oder einem Schiebewagen, montiert wird.

Wie erläutert, hat die Plattform 8 ein Gehäuse mit einer die Großfläche 15 ausbildenden Gehäusewandung, die parallel zur Grundplatte 28 verläuft. In dieser ist eine Aufnahme 24 für eine Tragkonsole eines Laserscanners 2 (IMAGER^{®}, Profiler^{®}) angeordnet. Beim dargestellten Ausführungsbeispiel ist die Aufnahme 24 taschenförmig ausgebildet, wobei an einem Boden 30 Befestigungsgewinde 32 für einen Stützflansch vorgesehen sind, der entsprechend der mechanischen Schnittstelle des Laserscanners 2 ausgeführt ist.

In der Darstellung gemäß Figur 5a nach rechts schließt sich an die Großfläche 15 die schräg angestellte Schrägfläche 13 an, an der ebenfalls eine Aufnahme 24 ausgebildet ist, in die gemäß der Darstellung in den Figuren 5a und 5b ein Stützflansch 34 für den Laserscanner 2 eingesetzt ist.

An Seitenwandungen des Plattform-Gehäuses sind vier Akkus 10a, 10b, 10c, 10d positioniert, wobei diese jeweils individuell auswechselbar und so verschaltet sind, dass die Stromversorgung während des Betriebs des oder der Laserscanner 2 gewährleistet ist. Beim dargestellten Ausführungsbeispiel sind die vier Akkus 10a, 10b, 10c, 10d im Bereich der an die Großfläche 15 angrenzenden Seitenwandungen des Gehäuses positioniert.

Ein die Schrägfläche 13 ausbildender Gehäusebereich 36 ist gegenüber einem die Großfläche 15 ausbildenden Gehäusebereich 38 beidseitig etwas zurückgestuft, so dass entsprechend die Schrägfläche 13 schmaler als die Großfläche 15 ist. Die Gehäusebereiche 36, 38 nehmen den vorbeschriebenen Onboard-PC auf, der leistungsfähig ausgeführt ist, so dass er die vorbeschriebene Datenverarbeitung mit großer Geschwindigkeit durchführen kann und so eine unmittelbare Datenverarbeitung ermöglicht ist. In dem Gehäuse ist des Weiteren noch die Kommunikationsschnittstelle vorhanden, über die eine Synchronisierung der vom Onboard-PC verarbeiteten Daten mit dem in dem oder den Laserscanner(n) 2 abgelegten Datensätzen erfolgt. Des Weiteren kann im Gehäuse noch eine weitere Kommunikationsschnittstelle vorhanden sein, über die eine Datenverbindung mit einem externen Rechner (Tablet, Handheld) 16 erfolgt. Prinzipiell kann es jedoch auch ausreichend sein, wenn diese Kommunikation über die jeweilige Scananordnung (beispielsweise den Laserscanner 2) erfolgt. Teile des Onboard-PCs und der Kommunikationsmodule sind in Figur 5b mit dem Bezugszeichen 40 versehen.

In Figur 6 sind nochmals schematisiert die wesentlichen Baugruppen der erfindungsgemäßen mobilen Scananordnung dargestellt. Diese weist, wie vorstehend erläutert, einen Laserscanner 2, beispielsweise zumindest einen IMAGER^{®}, auf, der auf einer Plattform 8 gemäß den Figuren 5a, 5b montiert sein kann. Dieser Laserscanner 2 kommuniziert über eine Funkverbindung, beispielsweise W-LAN mit dem externen Rechner, beispielsweise dem Handheld 16, über den eine Vorregistrierung im Feld durchgeführt werden kann - dies ist in Figur 6 oben links angedeutet. Auf diesem Handheld können auch Echtzeit-Vorschau-Scans der mittels der mobilen Scananordnung 1 erfassten SLAM-Daten gezeigt werden.

Wie vorstehend erläutert, steht der Laserscanner 2 in Datenverbindung, beispielsweise über ein LAN, mit der Plattform 8, über die eine Auswertung der Standortdaten und der mittels des Laserscanners 2 erfassten 3D-Punktewolke erfolgt. Dieser Laserscanner 2 kann je nach Auslegung im MMS-/SLAM-Rotationsmodus und im Profilmodus betrieben werden, um eine hochgenaue Trajektorie zu generieren. Wie erläutert, ist die Plattform 8 mit einer externen Schnittstelle zum Anschluss einer SSD 42 oder eines USB-Sticks ausgeführt, über den die vom Onboard-PC 40 erfassten Daten ausgelesen und an einen Zentralrechner 44 übertragen werden können. Selbstverständlich kann diese Übertragung auch kontaktlos erfolgen.

Wie bereits eingangs erläutert, kann der Onboard-PC 40 aufgrund seiner starken CPU mit den verbundenen Laserscannern 2, 2' synchronisieren und alle stationären Daten eines Projektes lokal auf der Plattform 8 abspeichern. Dabei können die Scans auch untereinander und mit den SLAM-Daten registriert werden. Prinzipiell ist es auch möglich, eine Prozessierung der Daten (Datenfilter, Personenerkennung und - maskierung (Datenschutz), Targeterkennung, Kolorierung, einen Datenexport, etc.) über den Onboard-PC 40 durchzuführen.

Die stationären Daten werden dann zusammen mit den SLAM-Daten auf den externen Speicher 42 kopiert. Wenn man diesen beispielsweise abzieht und in den Zentralrechner 44 einsteckt, kann das gesamte Projekt, beispielsweise stationäre Scans und SLAM-Daten, zusammen ausgewertet werden, ohne dass man noch zusätzlich Daten von den Laserscannern 2 herunterladen muss.

Des Weiteren können Vorschau-Scans der SLAM-Daten im Feld zum Laserscanner 2 synchronisiert und in das Projekt eingebunden werden. Dadurch kann der bisherige Feldworkflow weiterverwendet werden, wie er beispielsweise in dem eingangs beschriebenen Stand der Technik gemäß der EP 3 056 923 A1 der Anmelderin beschrieben ist.

Der Laserscanner 2 kann dann alle Daten eines Projektes (stationäre Scans und SLAM-Daten) an den Handheld 16 senden, an dem dann die Registrierung vorgenommen bzw. korrigiert werden kann. Das Handheld 16 synchronisiert die Änderungen zurück zum Laserscanner 2 und dieser wiederum auf die Plattform 8 und auf den daran angeschlossenen externen Speicher 42.

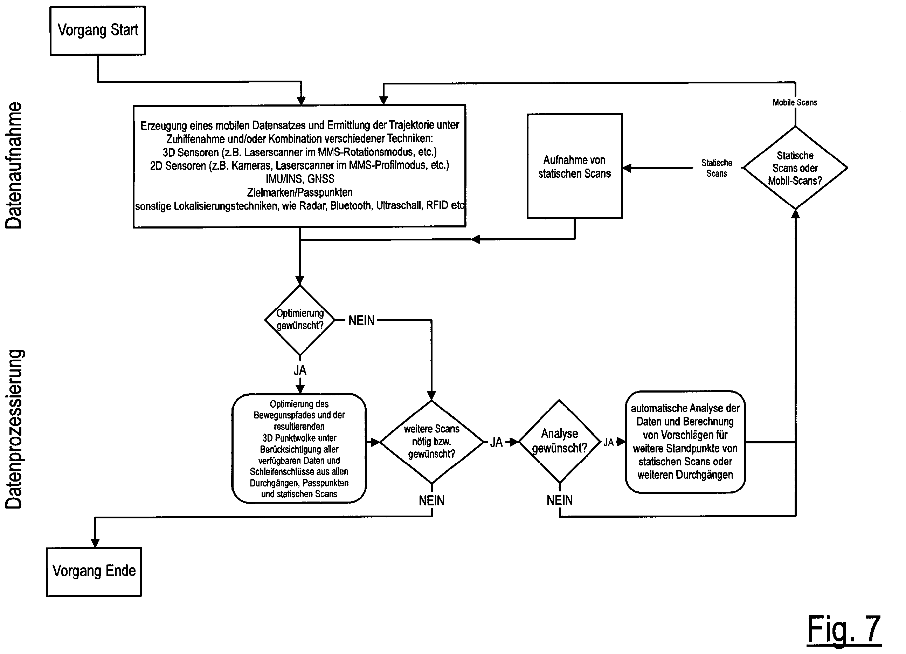

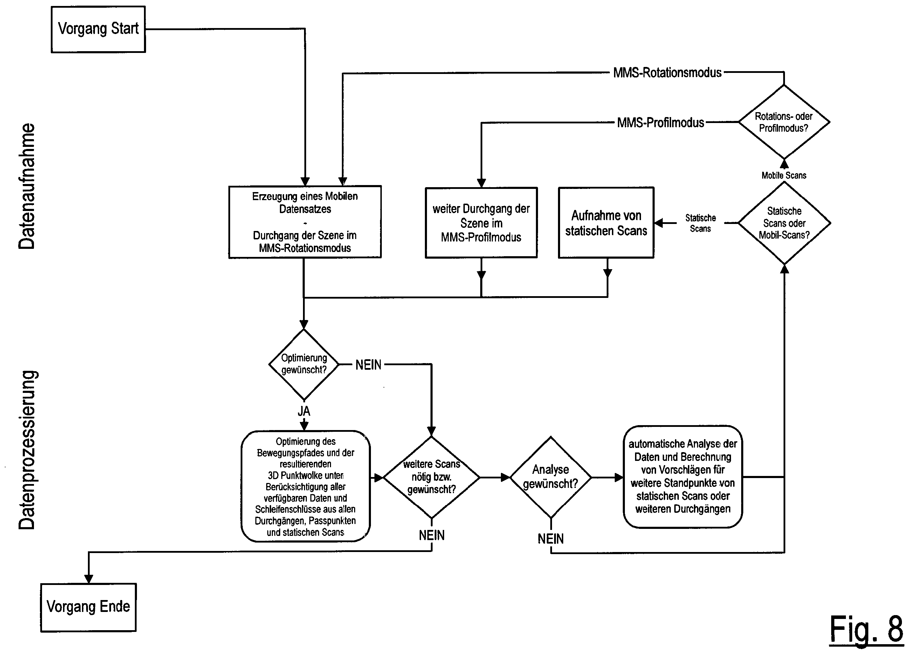

Weitere Details des erfindungsgemäßen Verfahrens werden im Folgenden anhand der Figuren 7 und 8 erläutert.

Figur 7 zeigt dabei das erfindungsgemäße Grundkonzept, während Figur 8 eine konkrete Lösung mit Laserscannern zeigt.

Es sei angenommen, dass mittels der erfindungsgemäßen Scananordnung das Innere einer Fertigungshalle vermessen werden soll. Die Scananordnung ist dabei mit einer Scaneinrichtung ausgeführt, die zur 2D- oder 3D-Vermessung von Objekten/Bereichen geeignet und die auf der Plattform 8 montiert ist und entlang einer vorbestimmten Bewegungsbahn verfahrbar ist. Gemäß dem in Figur 7 dargestellten Ablaufschema wird nach dem Starten des Messvorgangs (dieser Start kann beispielsweise durch Ansteuerung über den Onboard-PC 40 erfolgen oder aber auch direkt über die Scaneinrichtung generiert werden) zunächst ein mobiler Datensatz erzeugt und eine Trajektorie ermittelt, wobei dieser Datensatz und die Trajektorie mittels geeigneten Scaneinrichtungen, beispielsweise 3D-Sensoren (z.B. einen Laserscanner im MMS-/SLAM-Rotationsmodus) und/oder 2D-Sensoren (beispielsweise Kameras, Laserscanner im MMS-Profilmodus) erzeugt werden. Die Standortbestimmung erfolgt im Inneren von Fertigungshallen vorzugsweise über ein IMU-/INS-basiertes System oder ein GNSS-System. Dabei können auch Zielmarken/Passpunkte verwendet werden. Prinzipiell einsetzbar zur Standortbestimmung sind auch andere Lokalisierungstechniken, wie zum Beispiel Radar, Bluetooth, Ultraschall, RFID, etc.

Diese Punktewolken und auch die Standortinformationen werden dann, wie vorstehend erläutert, über den Onboard-PC 40 in der Plattform 8 verarbeitet, um die Trajektorie, etc. zu bestimmen.

Beim Start oder nach der ersten Auswertung der Daten kann vorgegeben werden, ob eine Optimierung der erhaltenen Daten gewünscht ist. Für den Fall, dass eine derartige Optimierung gewünscht ist, erfolgt eine Optimierung des Bewegungspfades und der resultierenden 3D-Punktewolke unter Berücksichtigung aller verfügbaren Daten und Schleifenschlüsse aus allen Durchgängen, Passpunkten und ggf. statischen Scans (hierauf wird in der Folge noch näher eingegangen). Diese Optimierung erfolgt dann mithilfe des Onboard-PCs 40. Prinzipiell kann die Entscheidung, ob eine Optimierung durchgeführt wird oder nicht, auch softwareseitig über den Onboard-PC 40 entschieden werden.

Für den Fall, dass keine Optimierung gewünscht ist (manuelle Entscheidung/Eingabe oder softwaregestützte Entscheidung), wird hilfsweise im nächsten Bearbeitungsschritt noch abgefragt, ob weitere Scans nötig bzw. gewünscht sind; sollte dies nicht der Fall sein, ist der Scanvorgang beendet.

In der Regel ist jedoch die vorbeschriebene Optimierung der Trajektorie und der 3D-Punktewolke gewünscht, so dass die Datenverarbeitung im nächsten Schritt in Abhängigkeit von einer Vorgabe erfolgt, gemäß der eine Analyse durchgeführt werden soll oder nicht.

Falls eine derartige Analyse mittels des Onboard-PCs 40 durchgeführt werden soll, erfolgt eine automatische Analyse der Daten und in der Folge eine Berechnung von Vorschlägen für weitere Standpunkte von statischen Scans oder für weitere Durchgänge im MMS-Profilmodus oder im MMS-Rotationsmodus.

In dem Fall, in dem keine Analyse über den Onboard-PC 40 erwünscht ist, wird direkt der nächste Schritt durchgeführt, gemäß dem manuell zu entscheiden ist, ob weitere statische Scans oder Mobilscans durchgeführt werden. Bei einer automatischen Analyse wird in der Regel diese Fragestellung bereits vom Onboard-PC 40 softwareseitig entschieden. Falls keine Analyse gewünscht wird, ist diese Entscheidung sozusagen "von Hand" vom Nutzer im Feld zu treffen. Entsprechend dieser softwareseitigen oder manuellen Entscheidung wird dann entweder ein weiterer mobiler Scan durchgeführt, wobei dieser je nach Vorgabe im MMS-/SLAM-Rotationsmodus oder im MMS-Profilmodus erfolgt. Dies erfolgt vorzugsweise entlang der gleichen Bewegungsbahn, wobei allerdings nicht immer die gleichen Schleifenschlüsse durchfahren werden müssen. Nach Durchführung dieses weiteren mobilen Scans werden dann die gleichen Verfahrensschritte durchgeführt, wie sie vorstehend erläutert sind. Alternativ kann auch ein statischer Scan durchgeführt werden.

In dem Fall, in dem ein statischer Scan durchgeführt werden soll, wird bei einer Analyse über den Onboard-PC 40 ein Standort für den statischen Scan vorgeschlagen und entsprechend die Scaneinrichtung in diesen Bereich verbracht. Dabei wird diese beispielsweise von der Plattform 8 oder der mobilen Einheit abgenommen und auf ein Stativ 26 oder dergleichen positioniert, wobei die exakte Standortpositionierung über die Systeme zur Standortbestimmung überwacht werden kann.

Nach Aufnahme des statischen Scans erfolgt dann wiederum entsprechend die Datenverarbeitung gemäß den vorstehenden Ausführungen. Diese Datenverarbeitung kann so lange wiederholt werden, bis die Datenqualität (des mobilen Datensatzes und der Standortdaten) den Vorgaben entspricht. In der Regel reicht es aus, wenn eine Vermessung im MMS-/SLAM-Rotationsmodus und im MMS-Profilmodus und ggf. noch mit einigen wenigen statischen Scans erfolgt.

Figur 8 zeigt ein konkretes Ablaufschema bei einer Scananordnung 1, die mit einem 3D-Laserscanner 2 (IMAGER^{®}) ausgeführt ist. Wie erläutert, wird bei diesem Ausführungsbeispiel in einem ersten Verfahrensschritt der Laserscanner 2 im MMS- /SLAM-Rotationsmodus betrieben, so dass über diesen ein mobiler Datensatz mit entsprechenden Standortdaten erzeugt wird.

In der Folge erfolgt die Datenverarbeitung gemäß dem anhand Figur 7 erläuterten allgemeinen Schema. Für den Fall, dass eine Optimierung der SLAM-Daten gewünscht ist, wird entweder manuell oder nach einer Analyse über den Onboard-PC 40 ein weiterer mobiler Scan oder ein statischer Scan durchgeführt.

In dem Fall, in dem ein mobiler Scan durchgeführt werden soll, wird entweder manuell oder über den Onboard-PC 40 vorgegeben, dass dieser Scan im MMS-Profilmodus oder im MMS-Rotationsmodus durchgeführt wird. In der Regel wird der zweite mobile Scan dann zur Erhöhung der Dichte der Punktewolke im MMS-Profilmodus durchgeführt.

Alternativ oder zusätzlich kann auch ein statischer Scan an den vom Onboard-PC 40 vorgegebenen Positionen oder an den vom Nutzer vorgegebenen Positionen durchgeführt werden. Diese mobilen und statischen Scans werden dann entsprechend des Verfahrensschemas in Figur 8 so lange durchgeführt, bis die Qualität des mobilen Datensatzes und der Trajektorie den Vorgaben entspricht und somit der Messvorgang beendet werden kann.

Wie vorstehend erläutert, kann der mobile Datensatz auch durch Kombination zweier 3D-Laserscanner oder zweier schräg zueinander angestellter 2D-Laserscanner oder einer Kombination eines 3D-Laserscanners mit einem 2D-Laserscanner erfasst werden.

Offenbart sind eine mobile Scananordnung und ein Verfahren zum Ansteuern einer derartigen Scananordnung, die eine sehr flexible Durchführung eines Messvorgangs in einem MMS-Rotationsmodus oder einem MMS-SLAM-Rotationsmodus und mit Hilfe eines statischen Scans und eine Auswertung über einen Onboard-PC zur Optimierung der Trajektorie und der resultierenden 3D-Punktewolke ermöglicht.

### Bezugszeichenliste

- 1: mobile Scananordnung
- 2: Laserscanner
- 4: Dreifuß
- 6: Kamerasystem
- 8: Plattform
- 10: Akku
- 11: Rotor
- 12: Lastenrucksack
- 13: Schrägfläche
- 14: Laserstrahlen
- 15: Großfläche
- 16: Handheld
- 17: Schmalseite
- 18: Batteriefach
- 20: Gewindebohrung
- 22: Gewindebohrung
- 24: Aufnahme
- 26: Stativ
- 28: Grundplatte
- 30: Boden
- 32: Befestigungsgewinde
- 34: Stützflansch
- 36: Gehäusebereich
- 38: Gehäusebereich
- 40: Onboard-PC, Kommunikationsmodul
- 42: SSD
- 44: Zentralrechner

## Patentansprüche

1. Mobile Scananordnung mit zumindest einer auf einer Plattform (8) montierten Scaneinrichtung zur 2D- oder 3D-Vermessung von Objekten/Bereichen, wobei die Plattform (8) so geführt ist, dass sie entlang einer vorbestimmten Bewegungsbahn verfahrbar ist und mit einer Recheneinheit, die in Datenverbindung mit der Scaneinrichtung steht und mit einer Einrichtung zur Standorterfassung, wobei die Recheneinheit ausgelegt ist, die mittels der in einem MMS-Rotationsmodus, insbesondere einem MMS-SLAM-Rotationsmodus betriebenen Scaneinrichtung und der Einrichtung zur Standorterfassung ermittelten Daten auszuwerten und eine Trajektorie der Scananordnung zu bestimmen, **dadurch gekennzeichnet, dass** die Recheneinheit ausgelegt ist, bei unzureichender Datenqualität der Trajektorie oder der 3D-Punktewolke zumindest eine Position zur zusätzlichen Durchführung eines statischen Scans zu bestimmen und eine entsprechende Information auszugeben.

2. Scananordnung nach Patentanspruch 1, wobei die Recheneinheit mit einer Auswerteeinheit zumindest einer Scaneinrichtung synchronisiert ist und dazu ausgelegt ist, die im mobilen und im statischen Modus erfassten Scan- und Standortdaten mit dem Ziel einer Registrierung im Feld zu verarbeiten.

3. Scananordnung nach Patentanspruch 2, wobei die Recheneinheit ausgelegt ist, die verarbeiteten Datensätze/Scandaten zurück zur Auswerteeinheit der Scaneinrichtung zu synchronisieren.

4. Scananordnung nach Patentanspruch 2 oder 3, wobei eine Vorregistrierung über eine mit der Scaneinrichtung in Datenverbindung stehende externe Recheneinheit, beispielsweise ein Tablet, oder über die Recheneinheit erfolgt.

5. Scananordnung nach einem der vorhergehenden Patentansprüche, wobei die Recheneinheit eine Schnittstelle für einen externen Speicher, beispielsweise eine SSD oder einen USB-Stick, hat, auf dem die Projektdaten abspeicherbar sind.

6. Scananordnung nach einem der vorhergehenden Patentansprüche, wobei die Plattform (8) zumindest zwei Aufnahmen (24) zur wahlweisen Positionierung einer Scaneinrichtung oder zur Positionierung von zumindest zwei Scaneinrichtungen hat, wobei die Aufnahmen (24) vorzugsweise in einem Winkel zueinander angestellt sind.

7. Scananordnung nach Patentanspruch 6, wobei an der Plattform (8) mehrere Akkus (10) gehalten sind, die derart verschaltet sind, dass ein Austausch einzelner Akkus (10) ohne Unterbrechung des Scanvorgangs erfolgen kann.

8. Scananordnung nach einem der vorhergehenden Patentansprüche, wobei die Scaneinrichtung ein 3D-, ein 2D-Laserscanner oder eine Kamera ist.

9. Scananordnung nach einem der vorhergehenden Patentansprüche, wobei die Einrichtung zur Standorterfassung ein IMU-/INS- oder GNSS-basiertes System oder ein System ist, das Lokalisierungstechniken wie Radar, Bluetooth, Ultraschall, RFID, etc. nutzt.

10. Verfahren zur Ansteuerung einer mobilen Scananordnung mit zumindest einer Scaneinrichtung, die auf einer Plattform (8) positioniert ist und mit einer Recheneinheit, die mit der Scaneinrichtung synchronisiert ist,
mit den Schritten:
- Erzeugung zumindest eines einem zu vermessenden Bereich zugeordneten mobilen Datensatzes, in einem MMS-Rotationsmodus, insbesondere in einem MMS-SLAM-Rotationsmodus der Scaneinrichtung;
- Auswertung des mobilen Datensatzes und Ermittlung einer Trajektorie mittels der Recheneinheit;
- Analyse der Trajektorie und des mobilen Datensatzes und **gekennzeichnet durch** die Schritte:
- Ausgabe eines Signals zur Durchführung zumindest eines statischen Scans an einem von der Recheneinheit bestimmten Standort und
- Auswerten des zumindest einen statischen Scans zur Bestimmung eines korrigierten mobilen Datensatzes und einer korrigierten Trajektorie.

11. Verfahren nach Patentanspruch 10, wobei der korrigierte mobile Datensatz über die Recheneinheit mit der Scaneinrichtung synchronisiert wird.

12. Verfahren nach Patentanspruch 10 oder 11, wobei auf der Basis des korrigierten Datensatzes im Feld eine Vorregistrierung oder eine Korrektur einer Registrierung mittels der Recheneinheit oder mittels eines mit der Scaneinrichtung in Datenverbindung stehenden externen Rechners durchgeführt wird.

13. Verfahren nach einem der Patentansprüche 10 bis 12, wobei die von der Recheneinheit oder der Scaneinrichtung verarbeiteten Datensätze auf einem externen Speicher abgelegt werden.

14. Verfahren nach einem der Patentansprüche 10 bis 13, wobei die Scananordnung ein 3D-Laserscanner ist, über den ein erster mobiler Datensatz in einem MMS-Rotationsmodus, vorzugsweise einem SLAM-Rotationsmodus und ggf. der statische Scan erzeugt wird und wobei zumindest ein zweiter mobiler Datensatz über den in einem Profilmodus betriebenen 3D-Laserscanner entlang der gleichen Bewegungsbahn oder über einen weiteren auf der Plattform (8) gehaltenen 2D-Laserscanner erzeugt wird.

15. Verfahren nach einem der Patentansprüche 10 bis 14, wobei die Scaneinrichtung für den zumindest einen statischen Scan von der Plattform (8) entfernt wird.

## Claims

1. A mobile scanning assembly having at least one scanning device mounted on a platform (8) for 2D or 3D measurement of objects/regions, wherein the platform (8) is guided in such a way that it can be moved along a predetermined path of movement, and having a computing unit that is in data connection with the scanning device, and having a device for location detection, wherein the computing unit is adapted to evaluate the data determined via the scanning device, which is operated preferably in an MMS rotation mode, in particular an MMS-SLAM rotation mode, and the device for location detection, and to determine a trajectory of the scanning assembly, **characterized in that** the computing unit is adapted, in the event of insufficient data quality of the trajectory or of the 3D cloud of points, to determine at least one position for additionally performing a static scan and to output corresponding information.

2. The scanning assembly according to claim 1, wherein the computing unit is synchronized with an evaluation unit of at least one scanning device and is adapted to process the scan and location data acquired in mobile and static mode with the aim of registration in the field.

3. The scanning assembly according to claim 2, wherein the computing unit is adapted to synchronize the processed data sets/scan data back to the evaluation unit of the scanning device.

4. The scanning assembly according to claim 2 or 3, wherein a pre-registration is carried out via an external computing unit, for example a tablet, which is in data connection with the scanning device, or via the computing unit.

5. The scanning assembly according to any of the preceding claims, wherein the computing unit has an interface for an external memory, for example an SSD or a USB stick, on which the project data can be stored.

6. The scanning assembly according to any of the preceding claims, wherein the platform (8) has at least two receptacles (24) for optional positioning of a scanning device or for positioning of at least two scanning devices, wherein the receptacles (24) are preferably set at an angle to each other.

7. The scanning assembly according to claim 6, wherein several accumulators (10) are held on the platform (8), which are connected in such a way that individual accumulators (10) can be replaced without interrupting the scanning process.

8. The scanning assembly according to any of the preceding claims, wherein the scanning device is a 3D scanner, a 2D laser scanner or a camera.

9. The scanning assembly according to any of the preceding claims, wherein the location detection device is an IMU/INS-based or GNSS-based system or a system using localization techniques such as radar, Bluetooth, ultrasound, RFID, etc.

10. A method for driving a mobile scanning assembly with at least one scanning device that is positioned on a platform (8) and with a computing unit that is synchronized with the scanning device, comprising the steps of:
- generating at least one mobile data set associated with a region to be measured, in an MMS rotation mode, in particular in an MMS SLAM-rotation mode of the scanning device;
- evaluating the mobile data set and determining a trajectory via the computing unit;
- analyzing the trajectory and the mobile data set, and **characterized by** the steps of:
- outputting a signal for performing at least one static scan at a location determined by the computing unit, and
- evaluating the at least one static scan to determine a corrected mobile data set and a corrected trajectory.

11. The method according to claim 10, wherein the corrected mobile data set is synchronized with the scanning device via the computing unit.

12. The method according to claim 10 or 11, wherein, on the basis of the corrected data set, a pre-registration or a correction of a registration is carried out in the field via the computing unit or via an external computer in data connection with the scanning device.

13. The method according to any of claims 10 to 12, wherein the data sets processed by the computing unit or the scanning device are stored on an external memory.

14. The method according to any of claims 10 to 13, wherein the scanning assembly is a 3D laser scanner, via which a first mobile data set is generated in an MMS rotation mode, preferably a SLAM rotation mode, and, if applicable, the static scan is generated, and wherein at least a second mobile data set is generated via the 3D laser scanner operated in a profile mode along the same path of movement or via a further 2D laser scanner held on the platform (8).

15. The method according to any of claims 10 to 14, wherein the scanning device for the at least one static scan is removed from the platform (8).

## Revendications

1. Dispositif de balayage mobile avec au moins un appareil de balayage monté sur une plate-forme (8) destiné à la mesure 2D ou 3D d'objets/zones, dans lequel la plate-forme (8) est guidée de sorte qu'elle soit mobile le long d'une trajectoire prédéterminée et avec une unité de calcul qui est en liaison de données avec l'appareil de balayage et avec un appareil destiné à la localisation, dans lequel l'unité de calcul est conçue pour analyser les données déterminées au moyen de l'appareil de balayage fonctionnant en mode de rotation MMS, en particulier un mode de rotation MMS-SLAM et de l'appareil destiné à la localisation, et déterminer une trajectoire du dispositif de balayage, **caractérisé en ce que** l'unité de calcul est conçue pour déterminer, lorsque la qualité de données de la trajectoire ou des nuages de points 3D est insuffisante, au moins une position destinée à la réalisation supplémentaire d'un balayage statique et délivrer une information correspondante.

2. Dispositif de balayage selon la revendication 1, dans lequel l'unité de calcul est synchronisée avec une unité d'évaluation d'au moins un appareil de balayage et est conçue pour traiter en mode mobile et en mode statique des données de balayage et de position acquises avec pour objectif un enregistrement dans le champ.

3. Dispositif de balayage selon la revendication 2, dans lequel l'unité de calcul est conçue pour synchroniser les jeux de données/données de balayage traités en retour vers l'unité d'évaluation de l'appareil de balayage.

4. Dispositif de balayage selon la revendication 2 ou 3, dans lequel un pré-enregistrement s'effectue par le biais d'une unité de calcul externe en liaison de données avec l'appareil de balayage, par exemple une tablette, ou par le biais de l'unité de calcul.

5. Dispositif de balayage selon l'une quelconque des revendications précédentes, dans lequel l'unité de calcul est dotée d'une interface pour une mémoire externe, par exemple une carte SSD ou une clé USB, sur laquelle les données de projet peuvent être enregistrées.

6. Dispositif de balayage selon l'une quelconque des revendications précédentes, dans lequel la plate-forme (8) est dotée d'au moins deux logements (24) destinés au positionnement sélectif d'un appareil de balayage ou destinés au positionnement d'au moins deux appareils de balayage, dans lequel les logements (24) sont de préférence employés selon un angle l'un par rapport à l'autre.

7. Dispositif de balayage selon la revendication 6, dans lequel plusieurs batteries (10) sont maintenues au niveau de la plate-forme (8), lesquelles sont interconnectées de telle sorte qu'un remplacement de batteries individuelles (10) puisse se produire sans interruption du processus de balayage.

8. Dispositif de balayage selon l'une quelconque des revendications précédentes, dans lequel l'appareil de balayage est un scanner laser 3D, un scanner laser 2D ou une caméra.

9. Dispositif de balayage selon l'une quelconque des revendications précédentes, dans lequel l'appareil destiné à la localisation est un système se basant sur IMU/INS ou GNSS ou un système qui utilise des techniques de localisation comme le radar, le Bluetooth, les ultrasons, la RFID, etc.

10. Procédé destiné à la commande d'un dispositif de balayage mobile avec au moins un appareil de balayage qui est positionné sur une plate-forme (8) et avec une unité de calcul qui est synchronisée avec l'appareil de balayage,
avec les étapes consistant à :
- générer au moins un jeu de données mobiles associé à une zone à mesurer, dans un mode de rotation MMS, en particulier dans un mode de rotation MMS-SLAM de l'appareil de balayage ;
- analyser le jeu de données mobiles et déterminer une trajectoire au moyen de l'unité de calcul ;
- analyser la trajectoire et le jeu de données mobiles et **caractérisé par** les étapes consistant à :
- émettre un signal destiné à la réalisation d'au moins un balayage statique au niveau d'une localisation déterminée par l'unité de calcul et
- analyser l'au moins un balayage statique pour déterminer un jeu de données mobiles corrigées et une trajectoire corrigée.

11. Procédé selon la revendication 10, dans lequel le jeu de données mobiles corrigées est synchronisé avec l'appareil de balayage par le biais de l'unité de calcul.

12. Procédé selon la revendication 10 ou 11, dans lequel, sur la base du jeu de données corrigées dans le champ, un pré-enregistrement ou une correction d'un enregistrement est réalisé au moyen de l'unité de calcul ou au moyen d'un ordinateur externe en liaison de données avec l'appareil de balayage.

13. Procédé selon l'une quelconque des revendications 10 à 12, dans lequel les jeux de données traités par l'unité de calcul ou l'équipement de balayage sont stockés sur une mémoire externe.

14. Procédé selon l'une quelconque des revendications 10 à 13, dans lequel le dispositif de balayage est un scanner laser 3D, par l'intermédiaire duquel un premier jeu de données mobiles est généré dans un mode de rotation MMS, de préférence un mode de rotation SLAM et le cas échéant le balayage statique et dans lequel au moins un second jeu de données mobiles est généré par l'intermédiaire du scanner laser 3D fonctionnant en mode profil le long de la même trajectoire ou par le biais d'un autre scanner laser 2D maintenu sur la plate-forme (8).

15. Procédé selon l'une quelconque des revendications 10 à 14, dans lequel l'appareil de balayage pour l'au moins un balayage statique est éloigné de la plate-forme (8).
